# EUROPEAN PATENT APPLICATION

(11) **EP 1 452 977 A2**
(43) Date of publication of application: **01.09.2004**
(21) Application number: 04000622.3
(22) Date of filing: 14.01.2004
(51) Int. Cl.: G06F 17/30, H04L 29/12

(54) **Multiple registrars**

(30) Priority: 26.02.2003 US 375558
(71) Applicant: MICROSOFT CORPORATION, Redmond, Washington 98052 (US)
(72) Inventor: Cohen, Michael A., Seattle Washington 98112 (US); Mohammed, Yunus, Bellevue Washington 98007 (US)
(74) Representative: Grünecker, Kinkeldey, Stockmair & Schwanhäusser Anwaltssozietät

(57) **Abstract**

The present invention provides systems and methods for domain name registration. A domain application programming interface (AP1) is employed as an interface between one or more clients and a plurality of registrars, or providers. The domain API can return alternate domain names if a requested domain name is unavailable. The domain API can also implement failover among the registrars. Employing a plurality of registrars facilitates load-sharing and improved system performance.

## Description

### TECHNICAL FIELD

The present invention relates generally to computer systems, and more particularly to a system and method that provides a general purpose interface to register and manage Internet domains.

### BACKGROUND OF THE INVENTION

The Internet is a large network of interconnected computers. A particular computer or a file containing information on such a computer may be found through an "address." The address is a long combination of numbers; for example, the numeric address for a specific computer connected to the Internet might be 192.168.255.1. The addresses identify computers containing files in specific information or interactive formats, such as Hypertext Machine Language ("HTML"). The information or interactive portions are combined to form what are now commonly referred to as web pages.

Aliases for the numeric address, called domain names, are usually easier to remember. The aliases often have intrinsic meaning which facilitates identification of a particular computer or World Wide Web site ("web site"). Presently, Internet domain names available for use by the general public include a second level domain and a top level domain ("TLD") which correspond to a numeric address and identify the physical location of a computer. Second level domains within the TLD's can currently be registered for use with a body known as ICAAN.

Second level domain names can include any combination of twenty-six characters, except for certain characters such as "i/" and ".", among others, which have special meanings. It is common for companies to utilize either their company name or an important trademark, or both. Many of these domain names are under the .com top level domain. Second level domain names that use the .com TLD are popular for an additional reason. Internet users can use such second level domain names to bypass search engines, such as Yahoo, Excite, and Lycos, and directly access a company's web site by entering the business name as the second level domain followed by a .com extension. Internet users also use this shortcut to intuitively find companies or desired information by using company names or product names.

Prior to use, a proposed domain name must be registered (or otherwise obtained) with a domain name registrar. Generally, mapping of a domain name is carried out by a domain name server system such as a public Internet domain name server (DNS) system maintained by the registrar and the registration database authority known as InterNIC. Registration usually involves some sort of manual input of a root name and a selection of a top level domain name. Upon executing a script, a registration service typically checks one or more databases to determine if a domain name is available for registration. If registration is available, a service will permit a user to complete an online form to perfect registration.

The DNS system includes a set of protocols and services on a network that allows domain names to be utilized when looking for other hosts (*e.g.,* computers) on the network. Employing a distributed database of names, the DNS system establishes a logical tree structure called the domain name space. Each node or domain in the domain name space is named and can contain subdomains. Domains and subdomains are grouped into zones to allow for distributed administration of the name space.

The DNS provides a mechanism so backup databases can be identified in case a first one becomes unavailable. DNS databases are updated automatically so that information on one name server does not remain out-of-date for long. A client of the DNS is called a resolver; resolvers are typically located in an application layer of networking software residing on TCP/IP capable machines. Users typically do not interact directly with the resolver. Resolvers query the DNS by directing queries at name servers, which contain parts of the distributed database that is accessed by using the DNS protocols to translate domain names into IP addresses needed for transmission of information across the network.

### SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention relates to systems and methods for a providing general purpose interface to register and/or manage Internet domains and/or suggest alternates to domain names that are currently registered or otherwise unavailable. In particular, a domain application programming interface (API) is provided in accordance with the present invention, which includes a collection of methods and configuration tables. Failover and retry logic can be implemented among the registrars to provide load balancing and failover. Registrar and failover preferences can be configured on per caller and/or per domain extension basis in the configuration tables.

More specifically, the present invention provides a domain API as an interface between one or more clients and a plurality of registrars. The domain API can include a failover component, which allows the domain API to interact with a second registrar if a first registrar fails, does not respond, or is heavily loaded. Accordingly, the present invention facilitates load sharing among registrars and overall improved performance of a domain registration system. Moreover, because the domain API can interact with a plurality of registrars, a new registrar can be added to an existing system within changing the existing system structure.

In addition, the present invention provides a domain API that can be employed to interface between one or more clients and a plurality of registrars, in which at least two of the plurality of registrars can support a same top level domain. In conventional domain registration systems, a domain API can only interface with one registrar, or provider, for each top level domain. Thus, the present invention provides a more robust system in which a second registrar supporting a particular top level domain can be chosen if a first registrar supporting the same top level domain is fully loaded, not responding, or otherwise unavailable.

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

Fig. 1 is a schematic block diagram illustrating an example of a domain registration system having multiple registrars in accordance with an aspect of the present invention.
Fig. 2 is a schematic block diagram illustrating an example of a domain API interfacing with a plurality of clients and a plurality of registrars in accordance with an aspect of the present invention.
Fig. 3 is a schematic block diagram illustrating an example of a domain API interfacing with at least one client and a plurality of registrars in accordance with an aspect of the present invention.
Fig. 4 is a schematic block diagram illustrating an example of configuration tables of a domain API in accordance with an aspect of the present invention.
Fig. 5 is a schematic block diagram illustrating an example of a common layer of a domain API in accordance with an aspect of the present invention.
Fig. 6 is a flow diagram illustrating an example of a domain request methodology in accordance with the present invention.
Fig. 7 is a flow diagram illustrating an example of a domain registration methodology in accordance with an aspect of the present invention.
Fig. 8 is a flow diagram illustrating an example of a multiple registrar query methodology in accordance with an aspect of the present invention.
Fig. 9 is a schematic block diagram illustrating exemplary environment for implementing various aspects of the invention.
Fig. 10 is a schematic block diagram illustrating a suitable operating environment in accordance with an aspect of the present invention.

### DETAILED DESCRIPTION OF THE INVENTION

The present invention relates to a system and methodology for a providing general purpose application programming interface (API) to register and/or manage Internet domains and/or suggest alternates to domain names that are currently registered or otherwise unavailable. A domain API is provided in accordance with the present invention, which includes a collection of methods and configuration tables in structured query language (SQL). SQL is an ANSI standard language for accessing databases, through which the behavior of the API can be controlled. The domain API can register domains of different extensions by working with multiple registrars. Failover and retry logic can be implemented among the registrars to provide load balancing and failover. Registrar and failover preferences can be configured on per caller and/or per domain extension basis in the SQL configuration tables.

As used in this application, the terms "component" and "system" are intended to refer to a computer-related entity, either hardware, a combination of hardware and software, software, or software in execution. For example, a component may be, but is not limited to being, a process running on a processor, a processor, an object, an executable, a thread of execution, a program, and a computer. By way of illustration, both an application running on a server and the server can be a component. One or more components may reside within a process and/or thread of execution and a component may be localized on one computer and/or distributed between two or more computers.

Also, as used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Accordingly, the subject invention (*e.g.*, in connection with the employment of registering domain names) can employ various artificial intelligence based schemes for carrying out various aspects of the subject invention. For example, registering alternate domain names can be facilitated *via* an automatic classification system and process. Such classification can employ a probabilistic and/or statistical-based analysis (*e.g.,* factoring into the analysis utilities and costs) to prognose or infer an action that a user desires to be automatically performed. For example, a support vector machine (SVM) classifier can be employed. Other classification approaches include Bayesian networks, decision trees, and probabilistic classification models providing different patterns of independence can be employed. Classification as used herein also is inclusive of statistical regression that is utilized to develop models of priority.

As will be readily appreciated from the subject specification, the subject invention can employ classifiers that are explicitly trained (*e.g., via* a generic training data) as well as implicitly trained (*e.g., via* observing user behavior, receiving extrinsic information) so that the classifier(s) automatically registers at least one alternate domain name in accordance with user preferences. For example, with respect to Support Vector Machines (SVM) which are well understood - it is to be appreciated that other classifier models may also be utilized such as Naive Bayes, Bayes Net, decision tree and other learning models - SVM's are configured *via* a learning or training phase within a classifier constructor and feature selection module. A classifier is a function that maps an input attribute vector, x = (x 1, x2, x3, x4, *xn* ), to a confidence that the input belongs to a class - that is, f(x) = *confidence(class)*. In the case of text-based domain name classification, for example, attributes are words or phrases or other domain-specific attributes derived from the words (*e.g.,* parts of speech, presence of key terms), and the classes are categories or areas of interest (*e.g.,* levels of priorities).

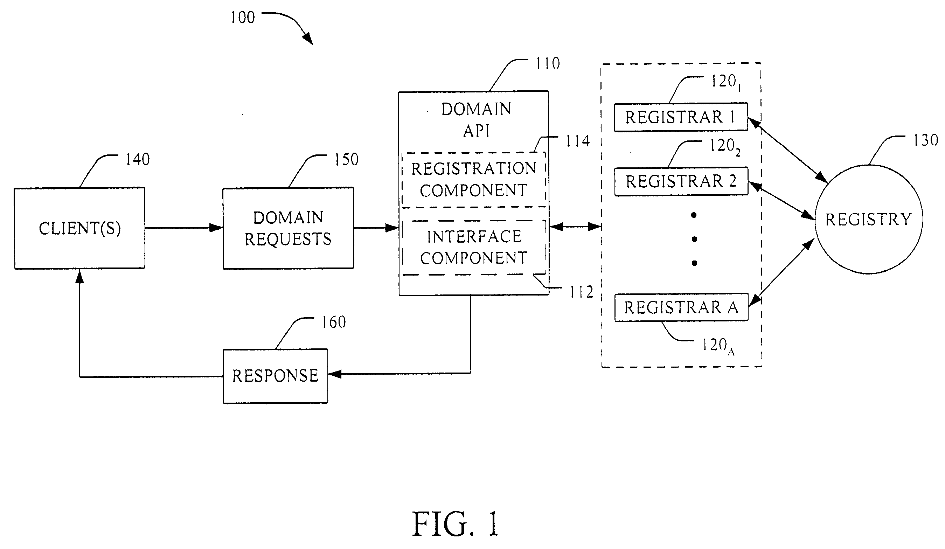

Referring initially to Figure 1, a schematic block diagram of a domain registration system 100 is depicted. The domain registration system 100 includes a domain API 110, which registers domains and can return alternates for domains that are not available. The domain API 110 can include an interface component 112 that receives at least one request to register a domain name and a registration component 114 that with a plurality of registrars, or providers, 120₁ through 120_{A}, A being an integer greater than or equal to one. The registrars, or providers, 120₁ through 120_{A} can be referred to collectively as registrar 120. However, it is to be appreciated that the interface component and registration component are not limited to individual components and may instead comprise one component incorporating the functionality of both. A failover component (not shown) can also be provided which allows the domain API 110 to interact with a second registrar if a first registrar is heavily loaded, does not respond, fails, or is otherwise unavailable. Accordingly, the present invention facilitates load sharing among registrars and overall improved performance of the domain registration system. Moreover, because the domain API 110 can interact with a plurality of registrars, a new registrar can be added to an existing system within changing the existing system structure.

A registrar acts on behalf of an entity, organization, or individual regarding original domain name registration, transfers or contact/domain name server (DNS) system modifications. The registrar submits and maintains a domain name with a registry database 130. The registry database 130 is a database in which the entities, organizations, or individuals submit new domain name registrations and update existing information, contact, and DNS information. Employing one central registry database 130 rather than a plurality of registry databases provides registration and management of domain names without allowing redundancy of domain names (*e.g.*, no two entities can register the same domain name).

However, it is to be appreciated that the present invention can function with more than one registry, or backup databases, in case the central registry is unavailable. The backup databases can be updated automatically, such that the information located in the backup databases remains current.

The domain registration system 100 further includes a one or more clients 140. The client(s) 140 can comprise an entity, organization, individual, etc. and can issue one or more domain requests 150 to the domain API 110. The domain API 110 is employed to transmit the domain request information to at least one of the plurality of registrars 120. Such information is generally transmitted as https requests. A selected registrar 120 submits the domain request information to the registry 130. If the requested domain name is available, the registry 130 transmits a response back to the registrar that the domain name is available. The registrar 120, in turn, transmits a response (e.g., https response) to the domain API 110. The domain API 110 then, transmits a response 160 to the client(s) domain request(s). The response 160 can includes one or more domain names, one or more alternate domain names, if the requested domain name(s) is unavailable, or an error message. A domain registration service can be employed to allow the client(s) 140 to perfect registration. Accordingly, the domain API 110 is a middleware layer and controls a pathway from the client(s) 140 to the plurality of registrars 120.

Moreover, in conventional domain registration systems, a domain API can only interface with one registrar, or provider, for each top level domain. Thus, if the registrar for a particular top level domain fails, experiences downtime, or is otherwise unavailable, client(s) would receive an error message or no message from that particular top level domain. Accordingly, the present invention also provides a plurality of registrars, which support a single top level domain, to mitigate such deficiencies and to provide a more robust domain registration system over the conventional systems.

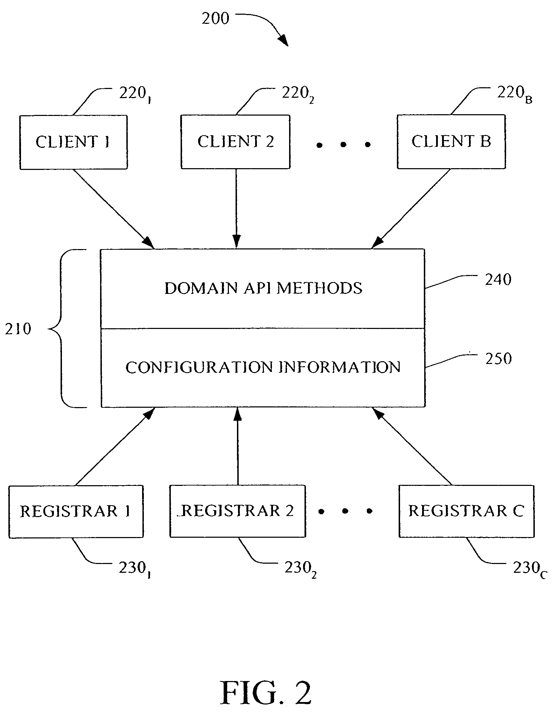

Turning now to Figure 2, a schematic block diagram of a multiple registrar system 200 is illustrated. The multiple registrar system 200 includes a domain API 210 for interfacing between a plurality of clients 220₁ through 220_{B} and a plurality of registrars 230₁through 230_{C}. B and C being integers greater than or equal to one. Moreover, B and C can be integers different than or equal to one another. The clients 220 can be identified by the domain API 210 by a unique ID. For example, the clients 220 can be identified by unique a 64 bit ID that is passed to the domain API 210 as two 32 bit integers, PUIDHigh and PUIDLow. The domains API 210 can interface with the clients 220 and registrars 230 over HTTP and Secure Sockets Layer (SSL). SSL is a protocol developed by Netscape to handle and protect confidential and/or sensitive information required for e-commerce transactions (*e.g.,* credit card information, social security number). SSL addresses generally begin with 'https'.

The domain API 210 includes a collection of domain API methods 240, which can be queried by the plurality of clients 220. The clients' credentials can be passed as arguments or HTTP headers to the collection of methods 240. Moreover, the credentials are encrypted if communication is transmitted over SSL. Accordingly, upon verification of the clients' credentials, the domain API 210 can respond to the clients' queries based on at least one of the methods in the collection of methods 240. The methods residing in the collection of methods 240 can include:
PDRESULT QueryDomain(string DomainData)

The QueryDomain method queries the domain API for domain availability. If the domain is available, a SUCCESS notification is returned to the requesting client.
PDRESULT ReserveDomain(int PUIDHigh, int PUIDLow, string strserviceInstanceld, string DomainData, out string TrackingGuid)

The ReserveDomain method creates a domain with the supplied domain and user data supplied from the client. A Tracking GUID is returned for the client to track the domain reservation. The GUID is an anonymous user ID assigned to the client's web browser. The ReserveDomain method reserves the domain; thus, the domain is not yet purchased.
PDRESULT GetCustomerDomain(int PUIDNigh, int PUIDLow)

The GetCustomerDomain method returns the domains registered for a user. This method is generally employed by a user with management level rights to the system.
PDRESULT DisableDomain(int PUIDHigh, int PUIDLow, string ServiceInstanceld, int ReasonID)

The DisableDomain method marks a domain as disabled but does not deprovision the domain with the registrar. A disabled domain is not renewed and corresponding DNS records are not served.
PDRESULT ProvisionDomain(int PUIDHigh, int PUIDLow, string ServiceInstanceld, string DomainData)

The ProvisionDomain method purchases a domain such that the domain is active and corresponding DNS records are served.
PDRESULT TransferDomain(int PUIDHigh, int PUIDLow, string Servicelnstanceld, string DomainData)

The TransferDomain method initiates a transfer of a domain. A domain transfer occurs when an ownership of a domain name is transferred to a new owner.
PDRESULT FinalizeTransferDomain(string DomainName, string PartnerProfile, string strRegistrar, string OwnerKey, string OwnerPwd, DateTime CreationDate, DateTime NextRenewalDate, int RegistrationPeriod, bool TransferSucceeded, bool bOverwriteDns, string strFailureReason)

The FinalizeTransferDomain method is employed because the TransferDomain method does not instantaneously transfer ownership. Consent of the current owner must be obtained first. Accordingly, the FinalizeTransferDomain method is utilized to finalize a status of a domain upon receiving a success/fail notification from a registrar regarding a transfer pending domain.
PDRESULT EnableDomain(int PUIDHigh, int PUIDLow, string ServiceInstanceld)

The EnableDomain method re-enables a disabled domain. However, a disabled domain that is past its renewal date and that cannot be renewed per ICANN rules cannot be re-enabled.
PDRESULT UpdateOwner(string DomainData)

The UpdateOwner method updates the owner and owner information of a domain, such as an owner's name, address, billing information, etc.
PDRESULT DeprovisionDomain(string DomainName)

The DeprovisionDomain method de-provisions a domain with the registrar.
PDRESULT LookupDomain(string DomainData, out DomainInfoStruct DomainInfo)

The LookupDomain method retrieves WHOIS data of a domain that was registered by the domains service. WHOIS data can include information such as a domain name's current ownership, contact information, and name availability. Depending on the registrar. the method may obtain some or all of the WHOIS information.
PDRESULT RenewDomain(string strDomainName)

The RenewDomain method renews a domain with the registrar, as registration for domain names are renewed based on some scheduled interval.
PDRESULT GetAlternates(string DomainName, string PartnerProfile, string Category, string[] Keywords, out string XmlResults, out string TextResults)

The GetAlternates method obtains alternate available domain names for a domain name requested by the client that is not available.

The domain API 210 also includes configuration information 250. The configuration information 250 can be located in tables in SQL. The configuration information 250 is employed to select a registrar, or provider, from the plurality of registrars 230. The configuration information 250 can include client preferences, partner names, etc. Additionally, or alternatively, the registrar can be selected based on the load(s) of one or more of the plurality of registrars 230. Accordingly, the multiple registrar system 200 can provide load sharing and/or balancing among the plurality of registrars 230, which facilitates improved performance of a domain registration and/or management process.

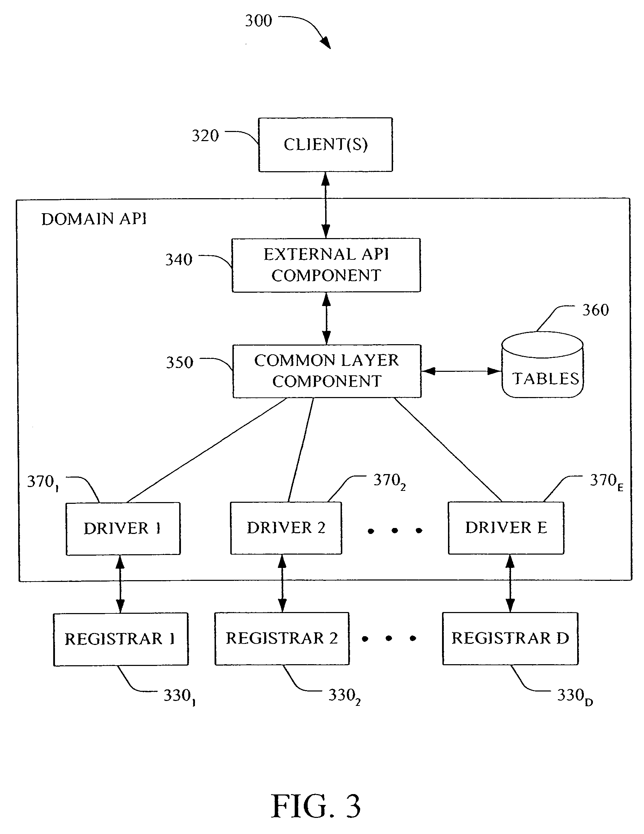

Figure 3 illustrates another example of a multiple registrar system 300 in accordance with an aspect of the present invention. The multiple registrar system 300 includes a domain API 310 for interfacing with at least one client 320 and a plurality of registrars 330₁ through 330_{D}, D being an integer greater than or equal to one. The domain API 310 can include an external API component 340, a common layer component 350, configuration tables 360, and a plurality of driver API components 370₁ through 370_{E}. E is an integer greater than or equal to one. The external API component 340 can be a method or a plurality of methods for processing information received by the client(s) 320. For example, the API component can validate the client(s) information and any other information passed from the client(s) 320 to the domain API 310. Based on the information passed from the client(s) 320 to the domain API 310, the external API component 340 can respond to the client(s) 320 with the following format:

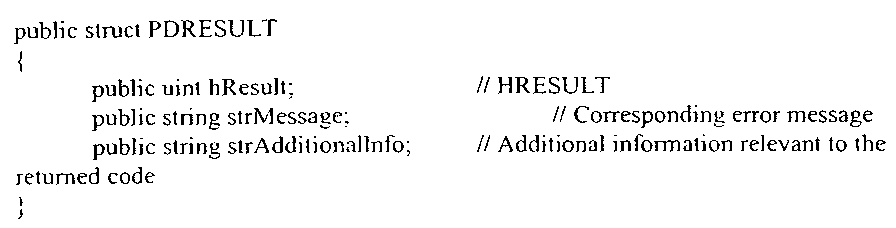

The following are possible error messages and corresponding error strings that can be returned by the external API component:

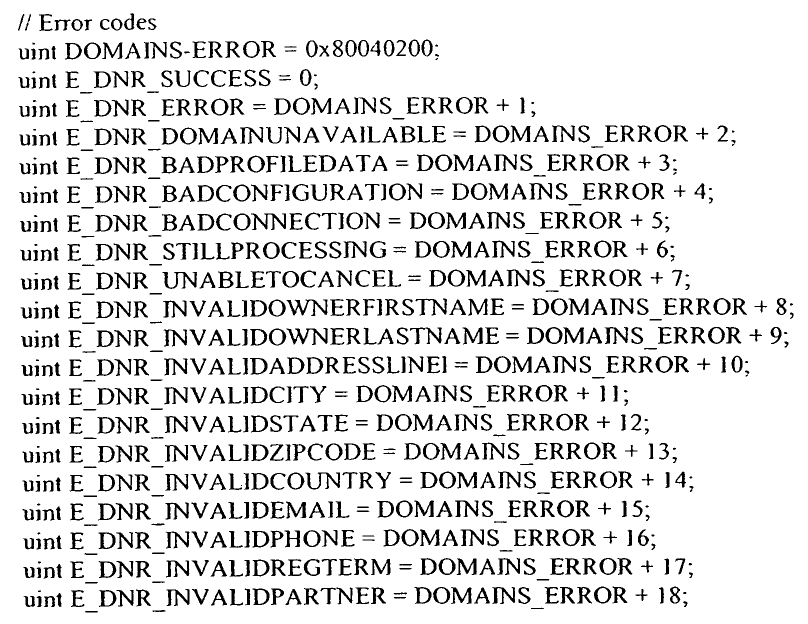

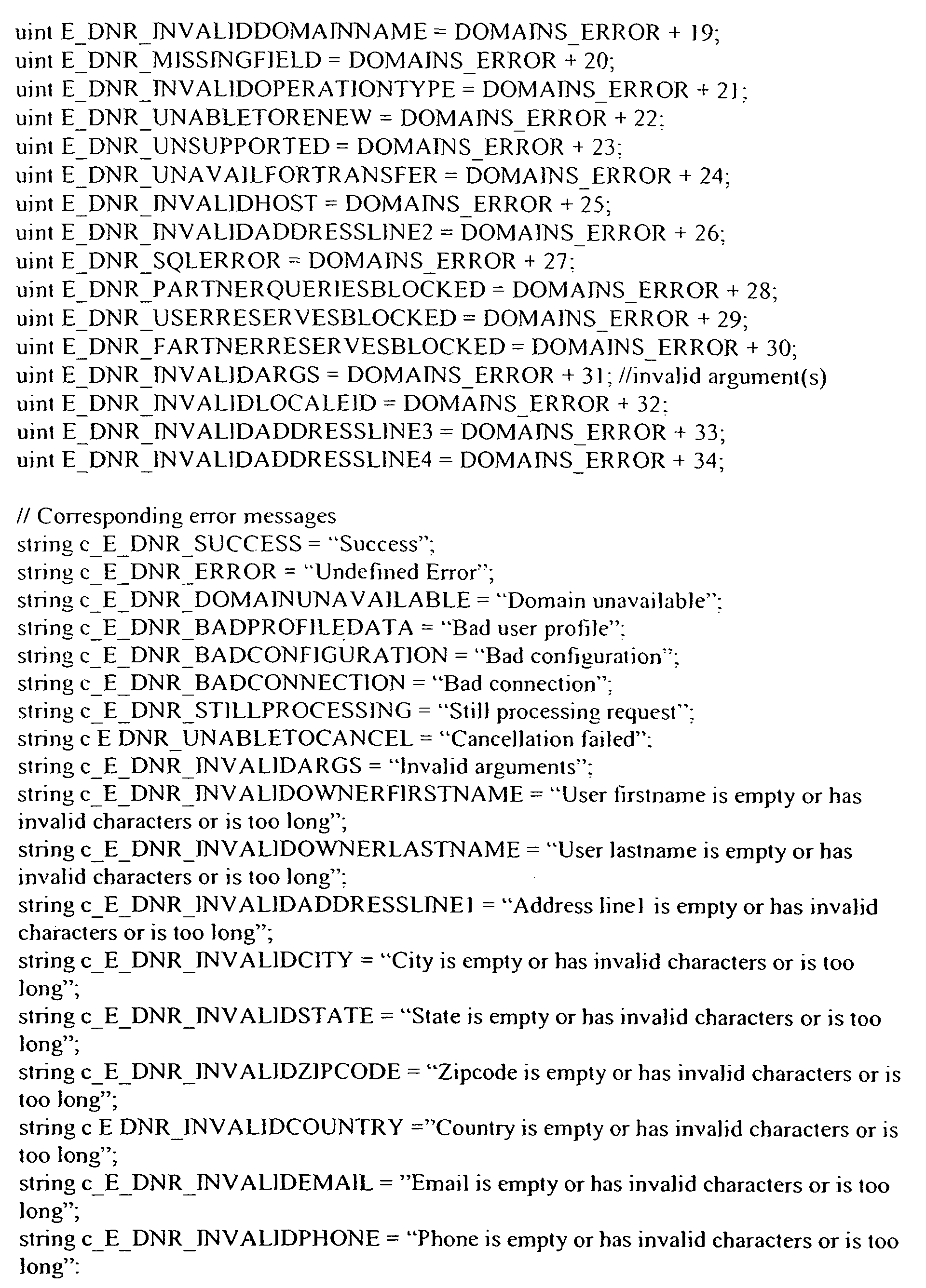

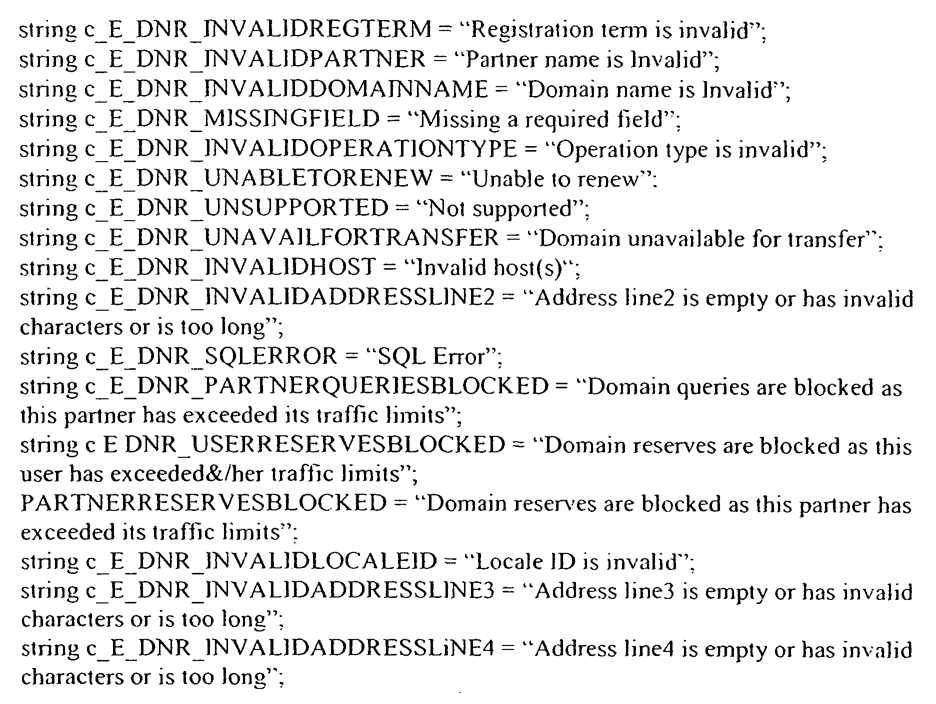

The common layer component 350 accesses configuration information from the configuration tables 360 in SQL, as will be discussed in greater detail below. The common layer component 350 is also employed to expose the external API component 340 to the client(s) 320 as Web methods. The Web method accepts an XmlElement array as an argument, which allows the client(s) 320 to submit multiple XML content items (as an array) for publication. Each XML content item is enclosed in a parent XML tag, but can contain any level of detail and nesting within that parent element. The Web method itself contains few lines of code; the work of validating content and saving is performed by a DocumentXML class.

Communication with the plurality of registrars 330 is performed *via* the plurality of drivers 370. There is at least one driver 370 corresponding to each registrar 330. The drivers 370 accept calls on a common driver API (not shown) and call out to the registrars 330 on a registrar/provider specific API (not shown). Accordingly, the common layer component 350 can communicate with the registrars 330 in a substantially uniform manner by calling the driver API on each of the drivers 370. The following are examples of methods in the driver API:

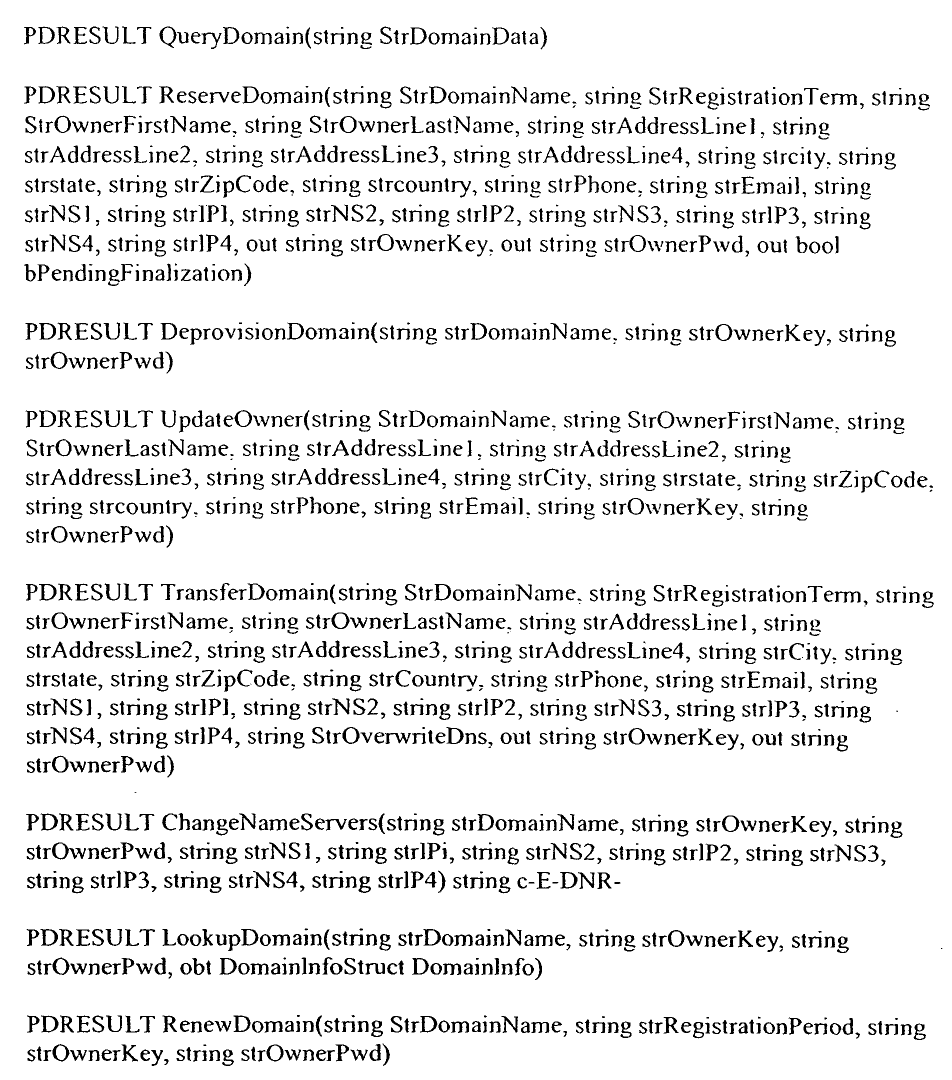

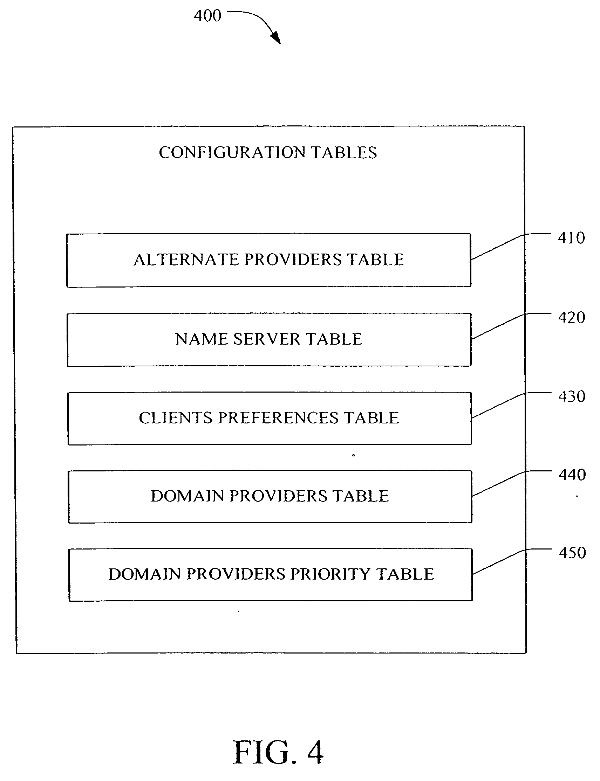

Turning now to Figure 4, an example of a configuration table 400 for a domain API is depicted in accordance with an aspect of the present invention. The configuration table 400 includes a plurality of tables stored in SQL, which are employed to control a behavior of a common layer component. In particular, the configuration table 400 can include an alternate providers table 410, a name server table 420, a client preferences table 430, a domain providers table 440, and a domain providers priority table 450. However, it is to be appreciated that any other suitable tables can also be provided in the configuration table 400.

Sometimes a client cannot register a desired domain name because another client has already registered the domain name with the NIC. The client must then choose an alternate domain name, which often results in difficulty in finding that entity's electronic resources on the Internet. Accordingly, an external provider can be employed to supply the functionality of providing alternate domain names for desired names that are currently registered to another or otherwise unavailable. The external provider can utilize various artificial intelligence based schemes to determine desirable alternate names for the client. For example, the alternate names can be customized based on the particular client suggesting the domain name. The alternate providers table 410 maintains an inventory such external providers. The external providers are ranked according to an order of priority in which the external providers are called when failover occurs. Each external provider entry includes a list of top level domains supported by the provider and a default 'category'. The default category is utilized when the client does not specify a category in the call to GetAlternates(). A 'category' is a provider specified word that can be employed when generating one or more alternate domain names.

It is to be appreciated that although external providers have been described as supplying alternate domain names, the domain API itself can include the functionality of providing alternate domain names when a requested domain is unavailable. The domain API can utilize various artificial intelligence based schemes to provide customized alternate domain names. For example, the suggested alternate domain names can be based on a history of the client and/or on a set of observed events.

The name servers table 420 lists a plurality of name servers. Name servers are employed for mapping domain names to their IP addresses (also known as DNS or host servers and for registering domains with providers (registrars). The client preferences table 430 includes a listing of client IDs. The IDs are specified by the client when calling the external API. The client preferences table 430 also includes client preferences, such as a preferred registrar provider. The preferred registrar provider is called before other registrars, unless failover occurs. The client preferences table 430 further includes name servers for utilizing when registering a domain for a client and DNS records (A and MX) for utilizing when serving a domain registered by this client.

Alternatively, or in addition, the client preferences table 430 can receive client preferences according to learned behavior or in an automated fashion using artificial intelligence. For example, when clients are introduced into or interface with a domain registration system, a domain API can observe events or actions by the clients to determine the clients likes and dislikes. Subsequently, the domain API can generate and/or obtain client preferences without requiring constant input from the user - thus, the domain API can exhibit learned behavior (*e.g.*, based at least in part on previous input provided by the user, or training - explicit as well as implicit).

The domain providers table 440 lists one or more registrar providers and one or more top level domains that each registrar supports. The domain providers priority table 450 provides a priority ranking for the registrar provider(s). Accordingly, the priority table 450 maintains a default order in which registrars will be invoked. However, the prioritization order listed in the domain providers priority table 450 can be altered by the registrar preference of a client, which can be stored in the clients preferences table 430. Multiple registrars are generally invoked in the event of a failover. However, it is to be appreciated that multiple registrars can be invoked for any other suitable reasons.

Further, a domain API can recognize a load that each registrar is carrying and create a priority list based on the registrars' loads to facilitate load sharing amongst the registrars. Moreover, the priority list employed for invoking registrars can be based on a combination of a clients' preferences (or default priority list) and the registrars' loads. The priority list(s) may or may not be visible to the clients.

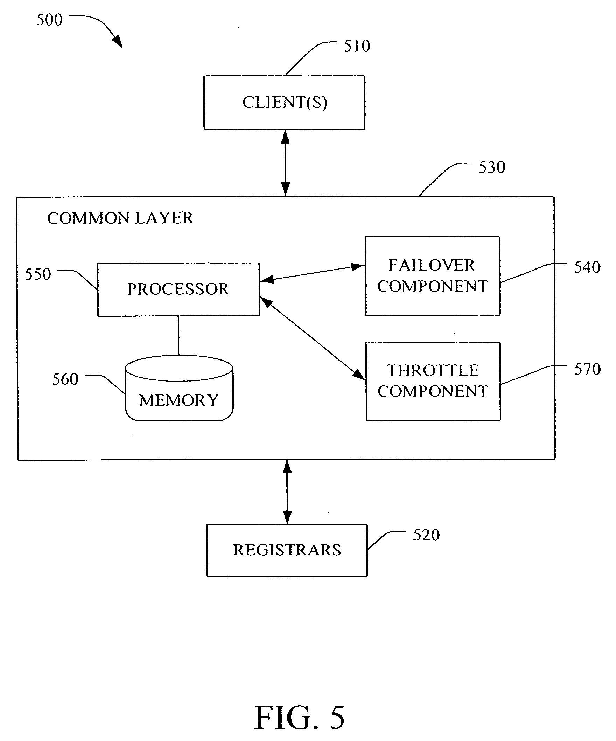

Figure 5 illustrates an example of a domain registration system 500 in accordance with an aspect of the present invention. The domain registration system 500 includes a domain API for interfacing between one or more clients 510 and a plurality of registrars 520. The domain API includes a common layer 530, which can read configuration information from SQL, expose an external API to the client(s) 510, and/or implement failover among registrars 520. When a method is called by a client(s), the common layer 530 obtains a default priority list of the registrars 520 for the domain name's top level domain. The common layer 530 can subsequently modify the default priority list as per at least one of: the client(s) preferences, a domain extension, and a current load of the registrars 520. The common layer 530 then calls the registrars 520 as per the default or newly created priority list. However, failover can occur when calling a first registrar. Failover is a backup operational mode in which the functions of a system component, such as a processor, server, network, or database, for example, are assumed by secondary system components when the primary component becomes unavailable through either failure or scheduled down time. If failover occurs, the common layer 530 invokes a failover component 540, which works in conjunction with a processor 550 of the common layer 530 and an associated memory 560. Thus, if the call to a first registrar fails, the failover component 540 fails over to a second registrar in the priority list. If the second registrar returns a SUCCESS message, the common layer 530 returns the result to the client(s) 510. If the second registrar returns a FAILURE or BUSY message, the failover component 540 fails over to a third registrar, and so on. However, if all registrars on the priority list fail, a FAILURE message is returned by the common layer 530 to the client(s) 510. The failover process is not visible to the client(s) 510.

The common layer 530 also includes a throttle component 570. The throttle component 530, in conjunction with the processor 550 and associated memory 560, can limit a number of requests that the client(s) 510 can make to a domain API. The requests can be limited to a predetermined amount of calls within a predetermined time frame. Limiting the requests mitigates misuse of the domain API by, for example, users who may have obtained client credentials in an unauthorized manner. The common layer 530 communicates with the registrars 520 *via* driver APIs (not shown) associated with the registrars 520.

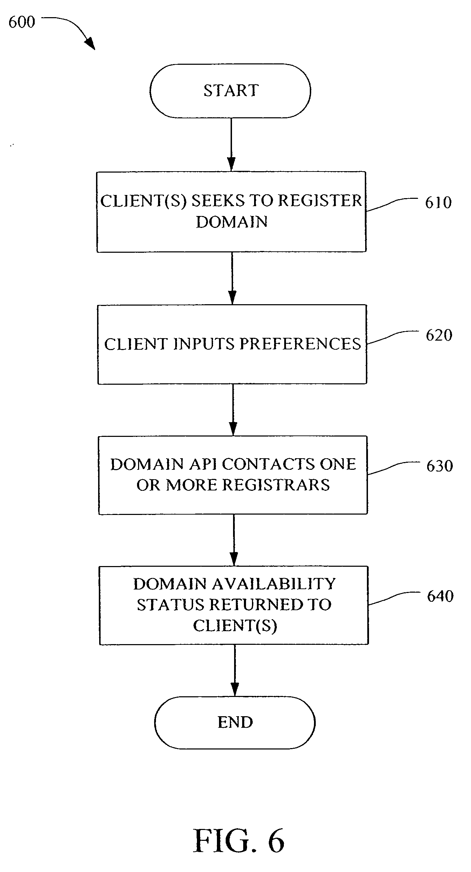

Figs. 6-8 illustrate methodologies for registering and managing domain names. While, for purposes of simplicity of explanation, the methodologies are shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

Figure 6 illustrates a methodology 600 for requesting a domain name in accordance with an aspect of the present invention. At 610, at least one client seeks to register a domain. The client(s) can enter one or more desired domain names for a registrar to search. The client(s) can also enter preferences, if any, at 620. Client preferences can includes a preferred list of registrars, top level domains, domain name keywords, etc. The desired domain name information and client preferences are transmitted to a domain API. The domain API can store the client(s) preferences and history of domain name requests. Accordingly, the domain API can provide intelligent responses to the client(s) during future transactions based on the client(s) history. The client(s) can be identified by a user name a password or other client credentials. At 630, the domain API contacts one or more registrars, or providers, with the requests and preferences entered by the client(s). A domain availability status message is returned to the domain API by one or more registrars and/or a registry. The status message is returned to the client(s) by the domain API at 640. The domain availability status can include one of success message, an error message, and one or more alternate domain names. The alternate domain names can be suggested based on the history of the client(s) and/or inferred based on a set of observed events.

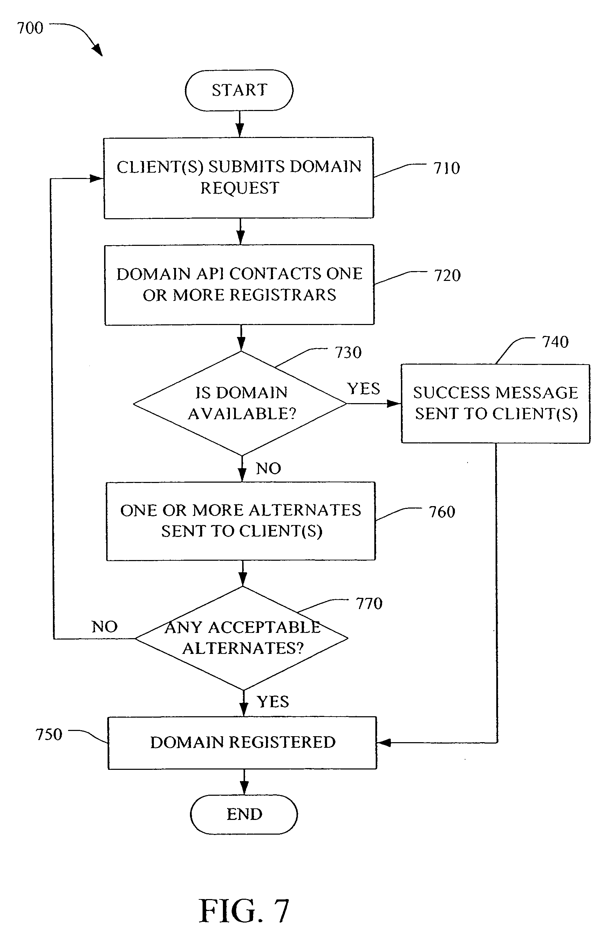

Figure 7 illustrates a methodology 700 for registering a domain name in accordance with an aspect of the present invention. At 710, a client (*e.g.*, entity, organization, individual) can submit a domain request to a domain API. The domain API contacts one or more registrars to register the requested domain at 720. The registrar(s) queries a registry database to determine whether the requested domain is available (730). If the requested domain is available (YES), a success message is provided to the client at 740; the requested domain is registered at 750; and the methodology ends. However, if the requested domain is not available (NO), one or more alternate domain names are provided to the client at 760 by the domain API. The client reviews the alternate domain names provided by the domain API and determine whether any of the alternates are acceptable to the client (770). If the client determines that one of the provided alternate names is acceptable (YES), the clients chooses the alternate domain name and the domain is registered at 750. However, if the client determines that none of the suggested alternate names are acceptable (NO), the methodology returns to 710 where the client can issue a new domain request to the domain API.

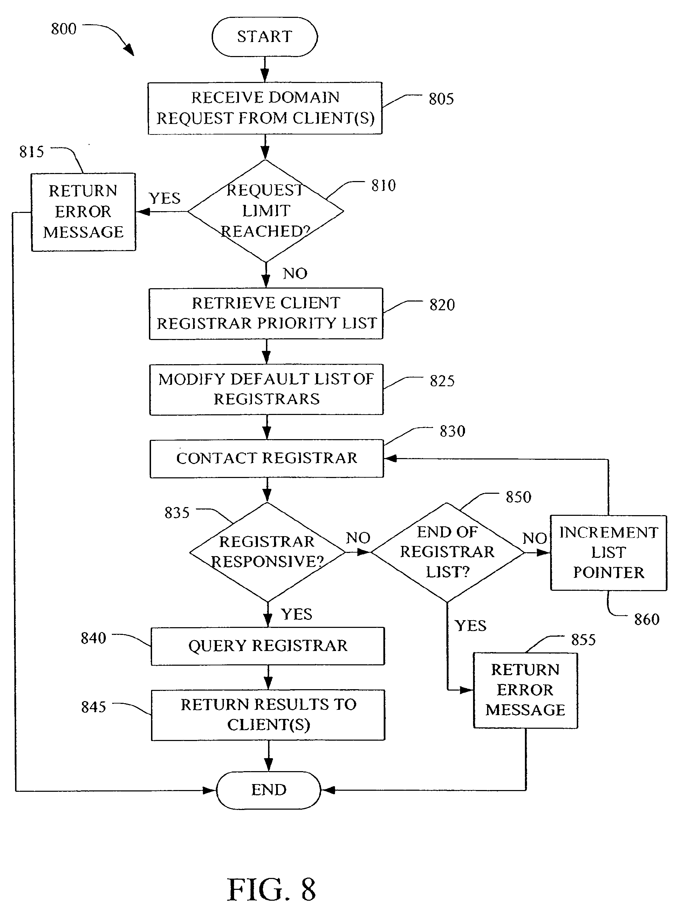

Turning now to Figure 8, a methodology 800 is illustrated for interfacing with a plurality of registrars. At 805, a domain API receives a domain request from one or more clients. The domain API determines, at 810, whether the client(s) has reached a request limit. The limit can be based on a predetermined number of requests during a predetermined time period. If the client(s) has reached a request limit (YES), the domain API returns an error message to the client(s) at 815 and the methodology ends. The error message can read "Domain queries are blocked as this partner has exceeded its traffic limits." Thus, the domain API limits users that may have obtained a client(s) credentials in an unauthorized manner and are making a large number of calls to the domain API. However, if the client(s) has not reached a request limit (NO), the methodology proceeds to 820.

At 820, the domain API retrieves a client(s) registrar priority list. The domain API then modifies the default list of registrars to match the client(s) priority list, if necessary, at 825. At 830, the domain API contacts the first registrar on the priority list. At 835, the domain API determines whether the first registrar is responsive. If The first registrar is response (YES), at 840, the domain API queries the first registrar with the domain request received from the client(s). Results from the query are returned to the client(s) at 845 and the methodology ends. However, if the first registrar was not responsive (NO), the domain API determines whether the domain API has reached the end of the registrar priority list at 850. If the end of the list has been reached (YES), an error message is returned to the client at 855. However, if the domain API has not reached the end of the registrar priority list (NO), a list pointer is incremented at 860, and the domain API returns to 830 to contact a second registrar. This methodology continues until the end of the registrar list is reached.

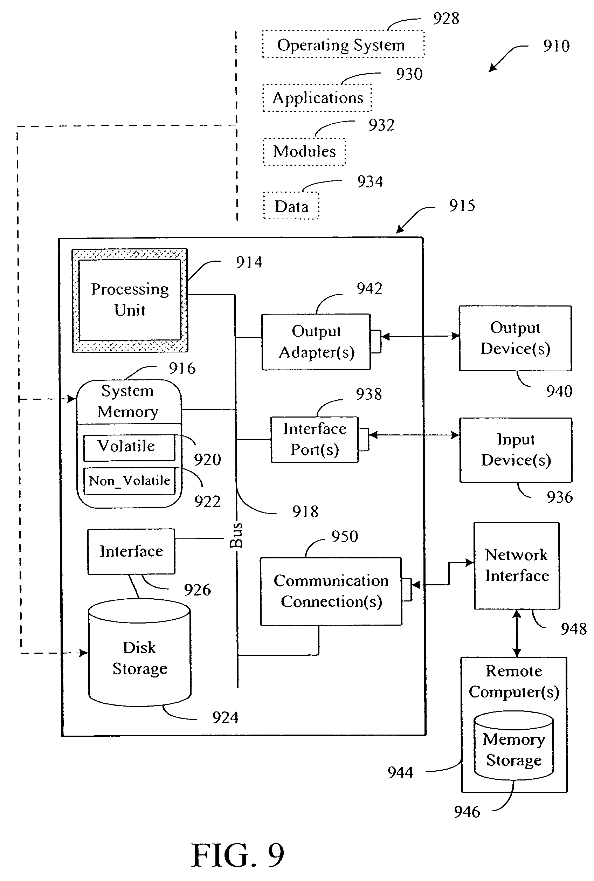

With reference to Figure 9, an exemplary environment 910 for implementing various aspects of the invention includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable ROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 912 also includes removable/non-removable, volatile/non-volatile computer storage media. Figure 9 illustrates, for example a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used such as interface 926.

It is to be appreciated that Figure 9 describes software that acts as an intermediary between users and the basic computer resources described in suitable operating environment 910. Such software includes an operating system 928. Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that the present invention can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912 and to provide output information from computer 912 to an output device 940. Output adapter 942 is provided to illustrate that there are some output devices 940 like monitors, speakers, and printers, among other output devices 940 that require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

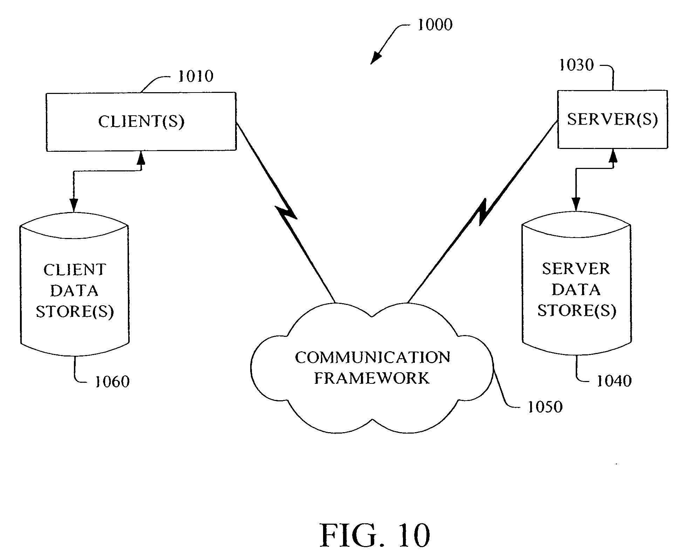

Figure 10 is a schematic block diagram of a sample-computing environment 1000 with which the present invention can interact. The system 1000 includes one or more client(s) 1010. The client(s) 1010 can be hardware and/or software (*e.g.,* threads, processes, computing devices). The system 1000 also includes one or more server(s) 1030. The server(s) 1030 can also be hardware and/or software (*e.g.*, threads, processes, computing devices). The servers 1030 can house threads to perform transformations by employing the present invention, for example. One possible communication between a client 1010 and a server 1030 may be in the form of a data packet adapted to be transmitted between two or more computer processes. The system 1000 includes a communication framework 1050 that can be employed to facilitate communications between the client(s) 1010 and the server(s) 1030. The client(s) 1010 are operably connected to one or more client data store(s) 1060 that can be employed to store information local to the client(s) 1010. Similarly, the server(s) 1030 are operably connected to one or more server data store(s) 1040 that can be employed to store information local to the servers 1030.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates domain registration comprising:
an interface component that receives at least one request to register a domain name; and
a registration component that interfaces with a plurality of registrars to register the domain name, wherein a first registrar of the plurality of registrars supports a same top level domain as a second registrar of the plurality of registrars.

2. The domain registration system of claim 1, further comprising a failover component that implements failover among the plurality of registrars.

3. The domain registration system of claim 1, further comprising a throttling component that limits a number of requests that can be made to the plurality of registrars within a predetermined time period.

4. The domain registration system of claim 1, wherein the interface component returns alternate domain names if a requested domain name is unavailable.

5. The domain registration system of claim 1, wherein the interface component employs configuration information to provide load sharing among the plurality of registrars.

6. The domain registration system of claim 1, further including at least one client that issues domain name requests to the interface component.

7. The domain registration system of claim 1, wherein the plurality of registrars submit domain request information to a registry.

8. The domain registration system of claim 1, wherein all of the plurality of registrars support the same top level domain name.

9. The domain registration system of claim 1, wherein the interface component comprises a collection of methods and configuration tables.

10. The domain registration system of claim 9, wherein the configuration tables include an alternate providers table that lists external providers, the external providers employed to supply alternate domain names when a requested domain name is unavailable.

11. The domain registration system of claim 9, wherein the configuration tables include a name server table that lists name servers used for registering domains.

12. The domain registration system of claim 9, wherein the configuration tables include a client preferences table that lists client preferences.

13. The domain registration system of claim 9, wherein the configuration tables include a domain providers table that lists the plurality of registrars.

14. The domain registration system of claim 9, wherein the configuration tables include a domain providers priority table that lists a priority in which the plurality of registrars will be invoked.

15. The domain registration system of claim 1, wherein the interface component includes an external application programming interface component that interfaces between at least one client and the domain interface.

16. The domain registration system of claim 1, wherein the interface component includes a common layer component.

17. The domain registration system of claim 16, wherein the common layer component calls the plurality of registrars per a priority list, the priority list being a default list created by the system.

18. The domain registration system of claim 16, wherein the common layer component calls the plurality of registrars per a priority list, the priority list being a customized list created by a client.

19. The domain registration system of claim 16, wherein the common layer component calls the plurality of registrars per a priority list, the priority list being based upon a respective load carried by the plurality of registrars.

20. The domain registration system of claim 16, wherein the common layer provides a failover function to select a registrar from the plurality of registrars.

21. The domain registration system of claim 16, wherein the common layer provides a throttling function to limit a number of requests a client can make to the domain interface.

22. The domain registration system of claim 1, further comprising a plurality of drivers for providing a communications interface between the plurality of registrars and the interface component.

23. A domain registration system comprising:
a domain interface that interacts with a plurality of registrars and registers domains and returns alternate domain names when a requested domain name is not available; and
a failover component that interacts with the domain interface to implement failover among the plurality of registrars.

24. The domain registration system of claim 23, further comprising a throttling component that limits a number of requests that can be made to the plurality of registrars.

25. The domain registration system of claim 23, wherein the domain interface employs artificial intelligence to suggest the alternate domain names.

26. The domain registration system of claim 23, wherein the domain interface suggests the alternate domain names based on a history of a client.

27. The domain registration system of claim 23, wherein the domain interface suggests the alternate domain names based on a set of observed events.

28. The domain registration system of claim 23, wherein at least two of the plurality of registrars supports a same top level domain.

29. The domain registration system of claim 23, wherein the domain interface comprises a configuration component, an external application programming interface, a common layer, a driver application programming interface, and a connection to clients.

30. The domain registration system of claim 29, wherein the configuration component includes a plurality of tables stored in SQL.

31. The domain registration system of claim 23, wherein at least one of registrar preferences and failover preferences can be configured on at least one of a per caller and a per domain extension basis.

32. A general purpose interface comprising:
a collection of methods; and
a plurality of configuration tables, wherein at least one configuration table
stores information for a plurality of registrars, wherein at least two of the plurality of registrars support a same top level domain.

33. The general purpose interface of claim 32, further comprising an external component that interfaces with at least one client.

34. The general purpose interface of claim 33, further comprising a common layer that exposes the external component to the at least one client as web methods.

35. The general purpose interface of claim 32, further comprising a common layer that implements failover among the plurality of registrars.

36. The general purpose interface of claim 32, further comprising a common layer that implements throttling to limit a number of domain requests made by at least one client.

37. The general purpose interface of claim 32, further comprising a plurality of drivers for communicating with the plurality of registrars.

38. The general purpose interface of claim 32, wherein the configuration tables include an alternate providers table that lists external providers for supplying alternate domain names when a requested domain name is unavailable.

39. The general purpose interface of claim 32, wherein the configuration tables include a name server table that lists name servers used for registering domains.

40. The general purpose interface of claim 32, wherein the configuration tables include a client preferences table that lists client preferences.

41. The general purpose interface of claim 32, wherein the configuration tables include a domain providers table that lists the plurality of registrars.

42. The general purpose interface of claim 32, wherein the configuration tables include a domain providers priority table that lists a priority in which the plurality of registrars will be invoked.

43. A method for registering a domain name comprising:
submitting a domain request;
contacting a plurality of registrars to register the domain request, wherein failover is implemented if at least one of the plurality of registrars does not respond; and
providing a response based on the domain request.

44. The method of claim 43, wherein at least two of the plurality of registrars support a same top level domain.

45. The method of claim 43, wherein the response includes suggestions for alternate domain names if the requested domain is unavailable.

46. The method of claim 43, further comprising inputting client preferences, which include a prioritization of the plurality of registrars.

47. The method of claim 43, further comprising inferring client preferences, based on a set of observed events.

48. The method of claim 43, wherein an application programming interface is employed as middleware layer between a client requesting the domain and the plurality of registrars.

49. The method of claim 43, further comprising limiting an amount of domain requests that can be submitted within a predetermined time period.

50. A data packet transmitted between two or more computer components that facilitate domain registration, the data packet comprising:
a failover component for a plurality of registrars.

51. The data packet of claim 50, wherein at least two of the plurality of registrars support the same top level domain.

52. A computer readable medium storing computer executable components of a remote system comprising:
an interface component that interfaces between at least one client and a plurality of registrars;
a failover component that implements failover among the plurality of registrars.

53. A computer readable medium storing computer executable components of a remote system comprising:
an interface component that interfaces between at least one client and a plurality of registrars, wherein at least two of the plurality of registrars support a same top level domain.

54. A system that facilitates registration of domains comprising:
means for interfacing between at least one client and a plurality of registrars; and
means for implementing failover for the plurality of registrars.
